# EUROPÄISCHE PATENTSCHRIFT

(11) **EP 0 335 065 B1**
(45) Veröffentlichungstag und Bekanntmachung des Hinweises auf die Patenterteilung: **01.09.1993**
(21) Anmeldenummer: 89100627.2
(22) Anmeldetag: 14.01.1989
(51) Int. Cl.: F16C 1/10, F16C 1/14

(54) **Bowdenzug**
Bowden cable
Câble Bowden

(30) Priorität: 26.03.1988 DE 3810368
(43) Veröffentlichungstag der Anmeldung: 04.10.1989
(73) Patentinhaber: meflex Telecontrol GmbH & Co., D-35630 Ehringshausen (DE)
(72) Erfinder: Wasserberg, Siegfried, D-4030 Ratingen 6 (DE)
(74) Vertreter: Müller, Eckhard, Dr.

(56) Entgegenhaltungen:
- AT-B- 204 908
- DE-C- 656 903
- DE-C- 719 512
- DE-C- 722 661
- FR-A- 2 447 489
- US-A- 2 335 000
- US-A- 2 425 992

## Beschreibung

Die Erfindung bezieht sich auf einen Bowdenzug, bei welchen das Seil und der Schlauch derart mit je einer Trennstelle versehen sind, daß der Bowdenzug trennbar und auseinandernehmbar ist, ohne daß deswegen das Seil aus dem Schlauch gezogen werden müßte.

Ein derartiger Bowdenzug ist bereits aus der US-A-2 425 992 bekannt. Dabei erfolgt die Verbindung des Seiles durch zwei hakenförmig ineinandergreifende Kupplungsteile. Für den Anschluß des Schlauches sind an einem Anschlußstück, welches mit dem einen Schlauchteil verbundenen ist, seitlich nach außen verschwenkbare Arme vorgesehen, welche mit ihrem klauenförmig ausgebildeten Enden beim Zusammenklappen der Arme in einen entsprechend ausgeformten Bund eingreifen, welcher an einer Halterung für das zweite Schlauchteil angeordnet ist. Über die Trennstelle von Seil und Schlauch ist eine Hülse verschiebbar, welche gegen die Kraft einer an dem Anschlußstück abgestützten Druckfeder in einer die Schlauchtrennstelle freigebende Position verschiebbar ist. Nachteilig bei diesem bekannten Bowdenzug ist, daß das Lösen des Seiles aufgrund des Verschwenkens der Arme seitlich nach außen relativ viel Platz erfordert. Zudem müssen immer mehrere Handgriffe beim Lösen und Verbinden ausgeführt werden.

Der Erfindung liegt die Aufgabe zugrunde, eine Trennstelle an Seil und Schlauch zu schaffen, die es gestattet, den gesamten Bowdenzug gleichsam mit einem Handgriff zu trennen.

Diese Aufgabe ist durch einen Bowdenzug gelöst, der die in Anspruch 1 angegebenen Merkmale aufweist.

Bevorzugte Merkmale der Erfindung sind Gegenstand der Ansprüche 2 bis 4.

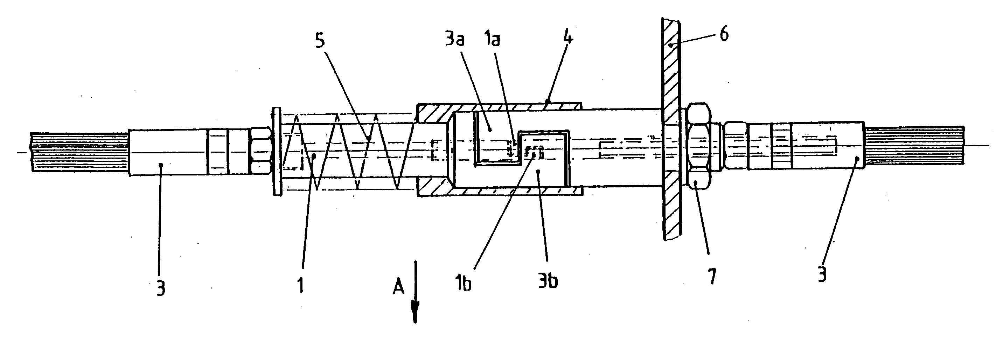

Der Bowdenzug wird nachfolgend anhand der Zeichnung näher beschrieben.

In der einzigen Figur ist mit 3 ein Schlauch bezeichnet, der an einer Schottwand 6 mittels einer Kontermutter 7 festgelegt ist. Im Schlauch 3 wird ein Seil 1 geführt, das eine hakenförmige Trennstelle 1a, 1b besitzt. In an sich bekannter Weise greifen diese Haken ineinander, so daß ein durchgehendes Seil 1 gebildet wird.

Der Schlauch 3 besitzt ebenfalls eine Trennstelle 3a, 3b, die durch die beiden hakenförmigen Enden gebildet wird. Wenn diese hakenförmigen Enden, wie in der Figur gezeigt, ineinandergreifen, entsteht der durchgehende Schlauch 3. Das Ineinanderhaken der Enden wird durch eine übergreifende Hülse 4 gesichert, die auf dem Schlauch 3 aus der gezeigten Arbeitsstellung heraus in der Darstellung nach links verschiebbar ist. In dieser zweiten Stellung werden die Enden 3a, 3b freigegeben, so daß der Schlauch 3 an dieser Stelle trennbar ist.

In die zweite Stellung kann die Hülse 4 nur gegen die Kraft einer Feder 5 verschoben werden, welche die Hülse 4 normalerweise in ihrer Arbeitsstellung hält.

Die Funktion dieses Bowdenzuges bzw. der Trennstelle ist aus der Zeichnung leicht verständlich. Wenn zunächst das Seil 1 mit seiner hakenförmigen Trennstelle 1a, 1b auf die Höhe der Trennstelle 3a, 3b geschoben wird und danach die Hülse 4 in die die Trennstelle mit den Enden 3a, 3b freigebende zweite Stellung überführt wird, so können sowohl der linke Teil des Schlauches 3 als auch der darin befindliche linke Teil des Seiles 1 nach unten in Pfeilrichtung A weggezogen werden. Der Bowdenzug ist dann in zwei Teile getrennt, und es können Seilstücke dazwischengehakt oder ein Seilteil ausgewechselt werden.

Für diesen Trennvorgang ist noch erforderlich, daß die senkrechten Kanten der Trennstellen 1a, 1b sowie der Enden 3a, 3b etwa parallel zueinander verlaufen. Dies kann z. B. dadruch herbeigeführt werden, daß das Seil 1 nach Zurückschieben der Hülse 4 von außen soweit gedreht wird, daß sich die Trennstelle öffnet. Besser ist es jedoch, wenn für die Enden der Trennstelle 1a, 1b des Seiles 1 in dem Bereich der Enden 3a, 3b eine Gradführung vorgesehen wird. Diese Gradführung kann in einer Nut in einem der Teile 1a, 1b und einem stift in einem der Enden 3a, 3b bestehen, der in diese Nut eingreift. Es können aber auch die Trennstellen 1a, 1b selbst nicht rund, sondern eckig ausgeführt sein und die Enden 3a, 3b eine entsprechende Innenbohrung in axialer Richtung besitzen, in denen die Trennstellen 1a, 1b, gegen Drehung gesichert, verschiebbar sein können.

## Patentansprüche

1. Bowdenzug mit einem einerseits mit einem Betätiger und andererseits mit einem zu betätigenden Getriebeelement verbundenen Seil (1) mit hakenförmig ausgebildeter Trennstelle (1a, 1b) und mit einem das Seil (1) führenden und sich an seinen beiden Enden an einer ersten und an einer zweiten ortsfesten Halterung abstützenden Schlauch (3), welcher ebenfalls eine Trennstelle (3a, 3b) aufweist, mit der die Seiltrennstelle (1a, 1b) entlang ihres Verschiebeweges zum Fluchten bringbar ist, sowie einer über die Schlauchtrennstelle (3a, 3b) schiebbaren Hülse, welche ggf. gegen die Kraft einer Feder (5) in eine die Schlauchtrennstelle (3a, 3b) freigebende Stellung verschiebbar ist, dadurch gekennzeichnet, daß die Schlauchtrennstelle (3a, 3b) in gleicher Weise wie die Seiltrennstelle (1a, 1b) hakenförmig ausgebildet ist, so daß der Bowdenzug bei etwa in der gleichen Richtung ausgerichteten Seil- und Schlauchtrennstellen (1a, 1b, 3a, 3b) trennbar ist.

2. Bowdenzug nach Anspruch 1, dadurch gekennzeichnet, daß an den Haken der Seiltrennstelle (1a, 1b) Gradführungsmittel vorgesehen sind, welche die Ausrichtung der Seilhaken zu den Schlauchhaken sichern.

3. Bowdenzug nach Anspruch 2, dadurch gekennzeichnet, daß die Gradführungsmittel in einer äußeren, kantigen Form der Seilhaken bestehen, die mit entsprechend geformten Löchern des Schlauches (3) bzw. der Schlauchhaken zusammenwirken und das Seil (1), gegen Verdrehung in Umfangsrichtung gesichert, in dem Schlauch (3) führen.

4. Bowdenzug nach Anspruch 3, dadurch gekennzeichnet, daß die Gradführungsmittel aus einer Längsnut in den Seilhaken und aus einem radialen Stift in mindestens einem der Schlauchhaken bestehen, der über den ganzen Verschiebeweg des Seiles (1) in die Längsnut eingreift.

## Claims

1. Bowden cable pull comprising a cable (1), which is connected at one end with an actuator and at the other end with a gear element to be actuated, with a separation point (1a, 1b) constructed in hook-shape, a casing (3), which guides the cable (1), is supported at its two ends at a first and at a second stationary mount and which similarly has a separation point (3a, 3b), by which the cable separation point (1a, 1b) can be brought along its displacement path into alignment, and a sleeve which is slidable over the casing separation point (3a, 3b) and which is displaceable, optionally against the force of a spring (5), into a setting freeing the casing separation point (3a, 3b), characterised thereby that the casing separation point (3a, 3b) is constructed in hook-shape in the same manner as the cable separation point (1a, 1b) so that the Bowden cable pull is separable at cable and casing separation points (1a, 1b, 3a, 3b) aligned approximately in the same direction.

2. Bowden cable pull according to claim 1, characterised thereby that parallel guidance means, which secure alignment of the cable hooks relative to the casing hooks, are provided at the hooks of the cable separation point (1a, 1b).

3. Bowden cable pull according to claim 2, characterised thereby that the parallel guidance means consists in an external edged shape of the cable hooks, which co-operate with correspondingly shaped holes of the casing (1) or of the casing hooks and guide the cable (1), secured against rotation in circumferential direction, in the casing (3).

4. Bowden cable pull according to claim 3, characterised thereby that the parallel guidance means consists of a longitudinal groove on the cable hooks and of a radial pin in at least one of the casing hooks, which pin engages in the longitudinal groove over the entire displacement path of the cable (1).

## Revendications

1. Câble Bowden comportant un câble interne (1) relié d'une part à un actionneur et d'autre part à un élément de mécanisme à actionner, pourvu d'une zone de séparation (1a, 1b) réalisée en forme de crochet et une gaine (3) de guidage du câble (1) prenant appui à ses deux extrémités dans une première et dans une deuxième fixations fixes et qui présente également une zone de séparation (3a, 3b) avec laquelle la zone de séparation (1a, 1b) du câble interne peut être mise en concordance le long de son parcours de coulissement possible ainsi qu'une douille coulissante disposée par dessus la zone de séparation (3a, 3b) de la gaine et qui peut être éventuellement repoussée à l'encontre de la réaction d'un ressort (5) dans une position libérant la zone de séparation (3a et 3b) de la gaine, caractérisé en ce que la zone de séparation (3a, 3b) de la gaine est réalisée sous la forme de crochets de la même manière que la zone de séparation (1a, 1b) du câble de sorte que le câble Bowden peut être séparé en deux parties par une orientation sensiblement similaire des zones de séparation (1a, 1b, 3a, 3b) du câble et de la gaine.

2. Câble Bowden selon la revendication 1, caractérisé en ce que des moyens de guidage en orientation sont prévus sur les crochets de la zone de séparation (1a, 1b) du câble qui fixe l'orientation des crochets du câble par rapport à ceux de la gaine.

3. Câble Bowden selon la revendication 2, caractérisé en ce que les moyens de guidage en orientation sont constitués par une forme extérieure angulaire des crochets du câble qui coopèrent avec des trous de forme correspondante de la gaine externe (3) ou des crochets de cette gaine et qui guide le câble (1) dans la gaine tout en l'assurant contre toute rotation dans le sens périphérique.

4. Câble Bowden selon la revendication 3, caractérisé en ce que les moyens de guidage en orientation sont constitués par une rainure longitudinale ménagée dans les crochets du câble et en une goupille radiale dans au moins l'un des crochets de la gaine et qui pénètre dans cette rainure sur tout le parcourt de coulissement du câble (1).
